# FASCICULE DE BREVET EUROPEEN

(11) **EP 1 924 421 B1**
(45) Date de publication et mention de la délivrance du brevet: **02.12.2009**
(21) Numéro de dépôt: 06808099.3
(22) Date de dépôt: 08.09.2006
(51) Int. Cl.: B29C 49/56

(54) **UNITE DE MOULAGE DE TYPE LINEAIRE POUR UNE INSTALLATION DE FABRICATION DE RECIPIENTS**
LINEARE FORMEINHEIT FÜR EINE BEHÄLTERFABRIKATIONSANLAGE
LINEAR TYPE MOLDING UNIT FOR A CONTAINER MANUFACTURING INSTALLATION

(30) Priorité: 09.09.2005 FR 0509189
(43) Date de publication de la demande: 28.05.2008
(73) Titulaire: SIDEL PARTICIPATIONS, 76930 Octeville sur Mer (FR)
(72) Inventeur: FREIRE-DIAZ, Philippe, F-76930 Octeville-sur-Mer (FR); AUVRAY, Sylvain, F-76930 Octeville-sur-Mer (FR)
(74) Mandataire: Cabinet Plasseraud
(86) Numéro de dépôt international: PCT/FR2006/002073
(87) Numéro de publication internationale: WO 2007/028909

(56) Documents cités:
- EP-A- 0 703 058
- EP-A- 1 533 103
- GB-A- 1 602 221
- JP-A- 62 178 319
- US-A- 3 883 286
- US-A- 4 352 653
- US-A1- 2004 156 943

## Description

L'invention a trait à la fabrication des récipients.

Elle concerne plus particulièrement une unité de moulage pour une installation de soufflage ou d'étirage-soufflage de récipients. Dans une telle installation, des ébauches (généralement réalisées dans une matière thermoplastique telle que PET) sont, dans un premier temps, chauffées au défilé dans un four à une température inférieure à (mais proche de) leur température de transition vitreuse, puis transférées vers une unité de moulage où elles sont mises en forme par soufflage ou étirage-soufflage.

Il existe actuellement deux grandes familles d'unités de moulage. Dans la première, qui correspond à des cadences de fabrication élevées (supérieures à 10 000 récipients/heure), sont regroupées les machines rotatives, dans lesquelles un carrousel porte une pluralité de moules répartis sur sa circonférence, chaque moule comprenant deux demi-moules montés en rotation l'un par rapport à l'autre selon un axe parallèle à l'axe du récipient, où les récipients sont successivement moulés à l'unité. Pour illustrer cette technique, on pourra se référer à la demande de brevet publiée sous le numéro FR 2 793 722, au nom de la demanderesse.

Dans la seconde, qui correspond à des cadences de fabrication plus modestes (inférieures à 10 000 récipients/h), sont regroupées les machines dites linéaires, dans lesquelles un moule comprend deux demi-moules déplaçables en translation l'un par rapport à l'autre, perpendiculairement au plan de joint du moule. Dans cette famille, les cadences peuvent être accrues en prévoyant un moule multi-empreintes pour le moulage simultané de plusieurs récipients.

L'invention vise cette deuxième famille d'unités de moulage. Précisons qu'entre le four et l'unité de moulage est généralement interposé un dispositif de transfert pour prélever par groupe les ébauches en sortie du four et les introduire dans l'unité de moulage en réglant leur entraxe. Ni le chauffage, ni le transfert des ébauches n'étant concernés par la présente invention, nous n'aborderons pas ces questions plus en détail dans ce qui suit.

Une première difficulté à laquelle sont confrontés les constructeurs dans la technique linéaire concerne l'ouverture et la fermeture des demi-moules. En effet, ces demi-moules (surtout lorsqu'ils comprennent plusieurs empreintes) sont relativement lourds ; or l'ouverture et la fermeture des demi-moules doit être réalisée en une fraction de seconde (de l'ordre de 0,5 seconde). Le mécanisme d'ouverture/fermeture doit donc être suffisamment puissant, et les frottements minimaux.

Une seconde difficulté concerne le verrouillage des demi-moules en position fermée (position dans laquelle a lieu le soufflage des récipients). En effet, lors du soufflage les demi-moules subissent d'importants efforts d'écartement, dus à la pression de soufflage qui peut atteindre 40 bars.

Parmi les solutions techniques connues, citons à titre d'exemple la demande de brevet français publiée sous le numéro FR 2 790 702, également au nom de la demanderesse. Outre cette demande, plusieurs brevets ont été déposés par d'autres sociétés pour la technique linéaire. Citons à titre d'exemple la demande de brevet européen publiée sous le numéro EP 0 703 058 (A.K. TECHNICAL LABORATORY). Dans ce document, le déplacement des pièces mobiles de l'unité de moulage (notamment les demi-moules) est assuré par des vérins. Cette technique requiert une importante puissance hydraulique, compte tenu des masses à déplacer. Une technique alternative consiste à remplacer les vérins par des moteurs linéaires (Cf. EP 1 533 103 (KOSME)) ou par des systèmes de vis sans fin (voir par exemple le brevet SIDEL précité, N° FR 2 790 702). Cette technique peut mettre en oeuvre les couples importants fournis par les moteurs électriques sans recourir aux puissances hydrauliques précitées, cependant,la lenteur du système hélicoïdal à vis sans fin limite les cadences de production. Quant aux moteurs linéaires, il est nécessaire d'assurer leur parfaite synchronisation, ce qui apparaît relativement délicat.

Les techniques connues se révèlent finalement insuffisantes pour surmonter de manière satisfaisante les difficultés qui viennent d'être exposées, et pour augmenter les cadences en toute sécurité.

L'invention vise notamment à pallier certaines insuffisances, précitées, des techniques connues.

A cet effet, l'invention propose une unité de moulage pour une installation de soufflage ou d'étirage soufflage de récipients à partir d'ébauches en matière thermoplastique, qui comprend :
- une paire de demi-moules, munis chacun d'au moins une demi-cavité de moulage, montés respectivement sur deux supports mobiles en translation horizontale suivant une direction transversale perpendiculaire à une direction longitudinale d'amenée des ébauches, entre une position fermée dans laquelle les supports sont rapprochés et où les demi-cavités forment conjointement une paroi latérale de la cavité de moulage, et une position ouverte dans laquelle les supports sont écartés l'un de l'autre ;
- une transmission primaire commandant le déplacement des supports de demi-moules et comprenant une came primaire montée sur un arbre tournant entraîné par un moteur, ainsi qu'un suiveur de came primaire coopérant avec la came primaire et couplé à chaque support de demi-moule ;
- un fond de moule monté sur un support mobile en translation verticale suivant une direction perpendiculaire aux directions longitudinale et transversale, entre une position haute dans laquelle une surface supérieure du fond de moule complète la cavité de moulage en position fermée des supports, et une position basse écartée de la position haute, sous celle-ci ;
- une transmission secondaire commandant le déplacement du support de fond de moule et comprenant une came secondaire montée sur le même arbre tournant, ainsi qu'un suiveur de came secondaire coopérant avec la came secondaire et couplé au support du fond de moule ;
- un dispositif de verrouillage, qui comprend deux verrous coopérant chacun avec un support de demi-moule, mobiles en translation entre une position de verrouillage dans laquelle les verrous bloquent les supports de demi-moules en position fermée, et une position de libération dans laquelle les verrous permettent le passage des supports de demi-moules en position ouverte ;
- une transmission tertiaire commandant le déplacement des verrous et comprenant une came tertiaire montée sur le même arbre tournant, ainsi qu'un suiveur de came tertiaire coopérant avec la came tertiaire et couplé à chaque verrou.

De la sorte, le mécanisme de commande des mouvements des pièces de l'unité de moulage, du type « tout mécanique », accroît à la fois la fiabilité et la longévité de celle-ci. En outre, la synchronisation entre les différentes transmissions découle directement du profil des cames et de leur montage sur un arbre de transmission unique.

D'autres objets et avantages de l'invention apparaîtront à la lumière de la description faite ci-après en référence aux dessins annexés dans lesquels :
- la figure 1 est une vue schématique en perspective montrant (en partie) une installation de fabrication de récipients à partir d'ébauches ;
- la figure 2 est une vue en perspective montrant partiellement une unité de moulage selon l'invention, pour une installation de fabrication de récipients ; sur cette figure, l'unité de moulage est représentée dans une configuration fermée/verrouillée ;

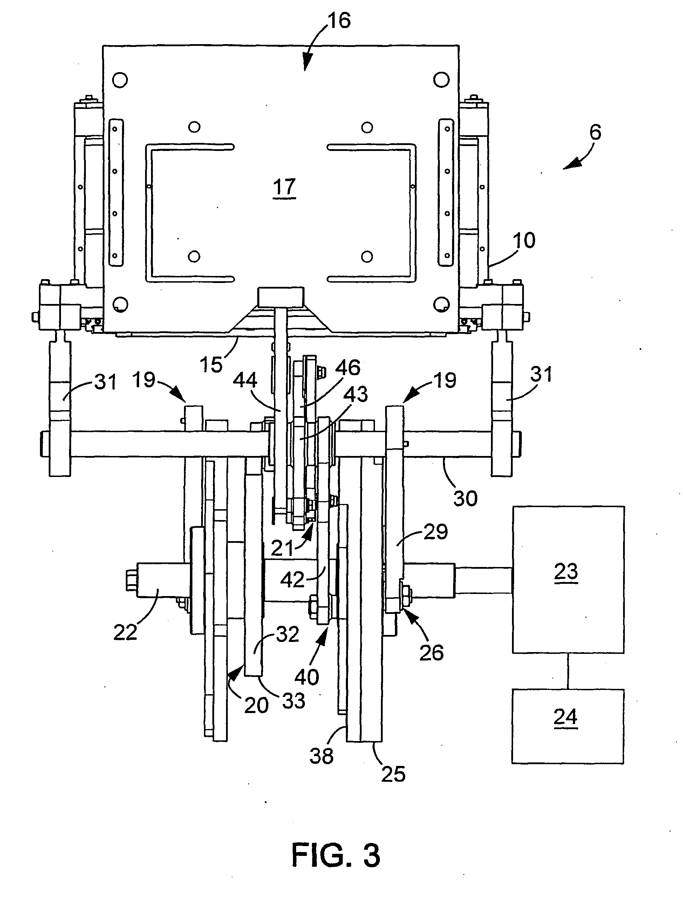

- la figure 3 est une vue d'élévation de côté montrant l'unité de moulage de la figure 2 suivant la direction III ;
- les figures 4A et 4B sont des vues similaires à la figure 2, respectivement dans une configuration position fermée/déverrouillée, et ouverte/déverrouillée ;
- les figures 5A, 5B et 5C sont des vues d'élévation de face (avec le moule en coupe) montrant l'unité de moulage des figures 2, 4A et 4B, dans les mêmes positions que sur ces figures, respectivement ;
- les figures 6A, 6B et 6C sont des vues d'élévation de face montrant l'unité de moulage limitée à la transmission secondaire, dans les mêmes positions que sur les figures 5A, 5B et 5C, respectivement ; et
- les figures 7A, 7B et 7C sont des vues d'élévation en coupe montrant l'unité de moulage limitée à la transmission tertiaire, dans les mêmes positions que sur les figures 5A, 5B et 5C, respectivement.

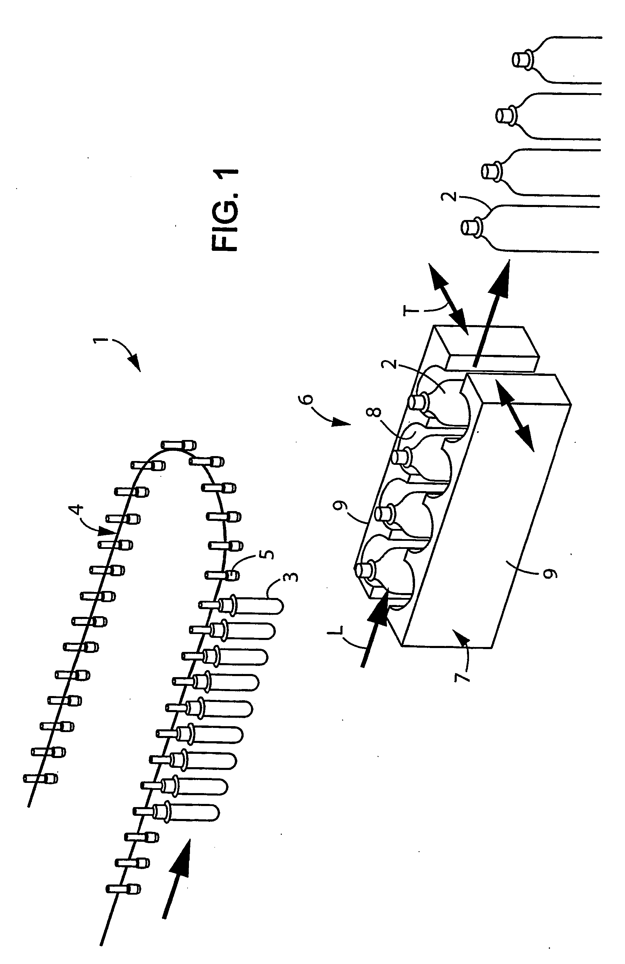

Sur la figure 1 est représentée schématiquement - et partiellement - une installation 1 de moulage de récipients 2 à partir d'ébauches 3 (qui sont en l'occurrence des préformes) en matière thermoplastique, tel que PET (Polyéthylène terephtalate).

Cette installation 1 comporte un carrousel 4 sur lequel sont montées les préformes 3, suspendues à des tournettes 5 qui les entraînent en rotation au moins lorsqu'elles parviennent à un four (ou unité de chauffe) où elles sont chauffées au défilé en étant par exemple exposées au rayonnement infrarouge de lampes tubulaires (non représentées).

Comme cela est représenté sur la figure 1, la machine 1 comporte également une unité 6 de moulage équipée d'un moule 7 à plusieurs empreintes ou cavités 8 (en l'occurrence quatre), dans lequel les ébauches 3 chaudes sont déchargées après avoir été transférées depuis le poste de chauffe au moyen d'un dispositif de transfert approprié (non représenté).

Par convention, on nomme longitudinale et on note L la direction suivant laquelle les préformes 3 sont amenées à l'unité de moulage 6.

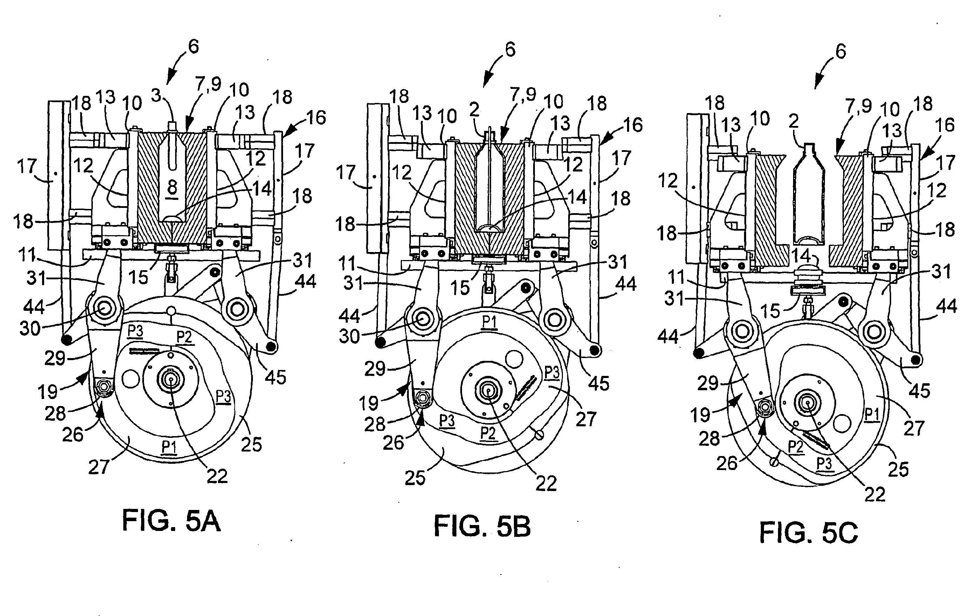

Le moule 7 comprend deux demi-moules 9 munis chacun d'au moins une demi-cavité de moulage (en l'occurrence quatre) et montés respectivement sur deux supports 10 mobiles en translation horizontale sur un châssis 11 fixe de l'unité de moulage 6, suivant une direction T transversale perpendiculaire à la direction L longitudinale d'amenée des préformes 3, entre :
- une position fermée dans laquelle les supports 10 sont rapprochés, les demi-moules 9 étant en contact mutuel et les demi-cavités formant conjointement une paroi latérale de la cavité 8. de moulage (Cf. les figures 5A et 5B), et
- une position ouverte dans laquelle les supports 10 (et donc les demi-moules 9) sont écartés l'un de l'autre pour permettre l'évacuation du récipient 2 formé (Cf la figure 5C), puis l'introduction d'au moins une préforme 3 entre les demi-moules 9.

Plus précisément, chaque demi-moule 9 se présente sous la forme d'une pièce monobloc rapportée, accrochée sur une platine 12 du support 10 correspondant, orientée dans un plan vertical parallèle à la direction L longitudinale.

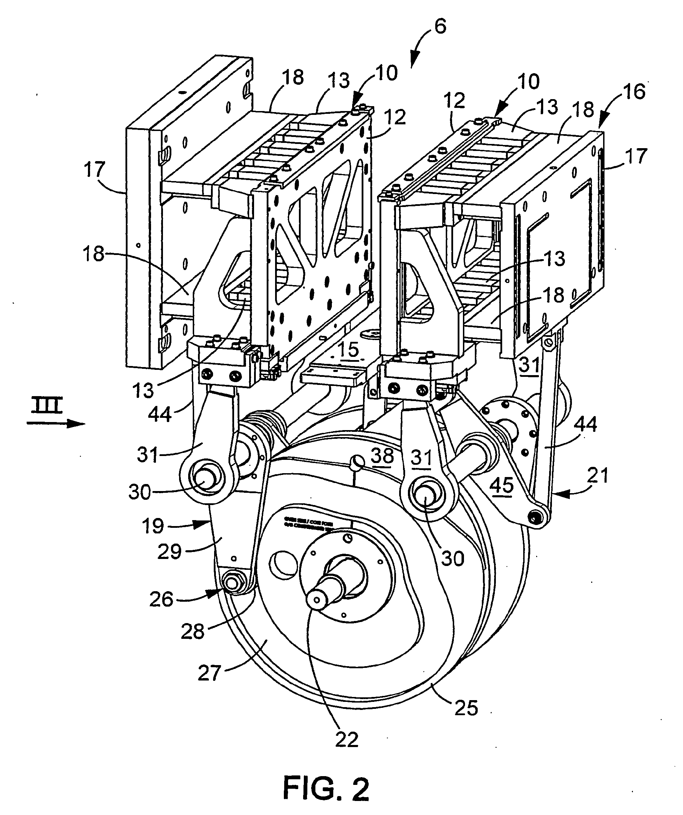

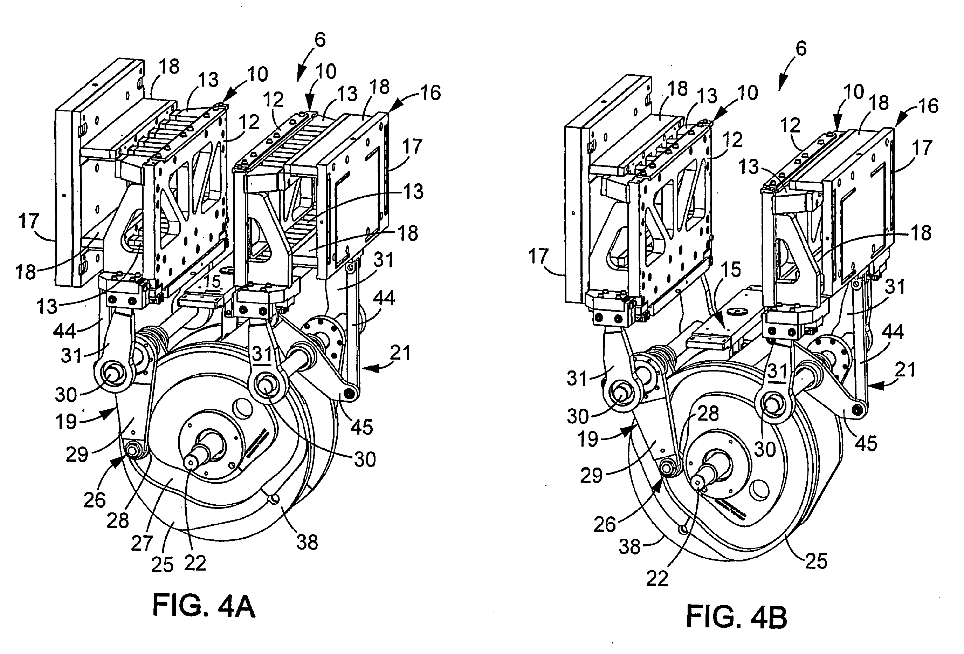

Comme cela est visible sue les figures 2, 4A et 4B, chaque support 10 est muni d'une paire de patins 13 cannelés superposés, qui s'étendent en saillie transversale en porte-à-faux sur la platine 12 à l'opposé du demi-moule 9 correspondant.

Le moule 7 comprend également un fond de moule 14 qui présente une surface supérieure complémentaire du fond du récipient 2 à former, et monté sur un support 15 mobile en translation verticale suivant une direction perpendiculaire aux directions longitudinale et transversale, entre :
- une position haute dans laquelle la surface supérieure du fond de moule 14 complète la cavité 8 de moulage en position fermée des supports 10 (Cf. les figures 5A et 5B), et
- une position basse écartée de la position haute, localisée sous celle-ci, pour permettre l'évacuation du récipient 2 formé (Cf. la figure 5C).

L'unité 6 de moulage comporte en outre un dispositif 16 de verrouillage du moule 7 en position fermée, afin de permettre à celui-ci de supporter les pressions du soufflage sans écartement intempestif des demi-moules 9.

Le dispositif 16 de verrouillage comprend deux verrous 17, coopérant chacun avec un support 10 de demi-moule et mobiles entre :
- une position de verrouillage dans laquelle les verrous 17 bloquent les supports 10 de demi-moules en position fermée (Cf. les figures 2 et 5A), et
- une position de libération, dans laquelle les verrous 17 permettent le passage des supports de 10 demi-moules en position ouverte ;

Comme cela est illustré sur les figures 5A à 5C, les verrous 17 sont déplaçables en translation verticale (parallèlement au mouvement du support de fond de moule), la position de libération étant localisée au-dessus de la position de verrouillage. Chaque verrou 17 est muni d'une paire de guides 18 transversaux cannelés superposés, dont l'écartement est identique à celui des patins 13 du support 10 correspondant.

En position de verrouillage, les patins 13 se trouvent en butée contre une extrémité des guides 18 correspondants, leurs cannelures respectives étant décalées verticalement, ce qui empêche tout mouvement d'écartement des supports 10. Par contre, en position de libération, les cannelures des patins 13 se trouvent dans l'alignement des cannelures des guides 18 correspondants, de sorte que les supports 10 peuvent librement coulisser en s'écartant l'un de l'autre, les patins 13 glissant dans leurs guides 18 respectifs.

La séquence des mouvements des supports 10 de demi-moules, du support 15 de fond de moule et des verrous 17 est la suivante.

En partant d'une configuration fermée/verrouillée de l'unité 6 de moulage, dans laquelle les supports 10 de demi-moules sont en position fermée, les verrous 17 en position de verrouillage et le support 15 de fond de moule est en position haute (figures 2, 5A, 6A, 7A), une fois terminé le cycle de soufflage du récipient 2, les verrous 17 sont déplacés vers le haut en position de libération (figures 4A, 5B, 6B, 7B). La configuration de l'unité 6 de moulage est dite fermée/déverrouillée. Dans cette configuration, les supports 10 de demi-moules sont maintenus en position fermée, et le support 15 de fond de moule en position haute. Le récipient 2 formé se trouve toujours dans la cavité 8 de moulage.

Puis les supports 10 de demi-moules sont écartés en position ouverte, cependant que le support 15 de fond de moule est déplacé vers sa position basse. L'unité 6 de moulage est alors dans une configuration dite ouverte/déverrouillée (figures 4B, 5C, 6C, 7C). Dans cette configuration, le récipient 2 formé est évacué, par exemple vers une unité de remplissage ou de stockage transitoire en vue d'un remplissage ultérieur.

Afin de permettre son passage d'une configuration à l'autre, l'unité 6 de moulage comprend plusieurs transmissions, à savoir :
- une transmission primaire 19 pour commander le déplacement des supports 10 de demi-moules,
- une transmission secondaire 20 pour commander le déplacement du support 15 de fond de moule, et
- une transmission tertiaire 21 pour commander le déplacement des verrous 17.

Ces transmissions, mécaniques, sont toutes pilotées simultanément par un arbre 22 de transmission commun, également appelé arbre à cames, dont la rotation est assurée par un moteur 23 électrique commandé par une unité 24 de contrôle de l'installation, unité 24 qui assure par ailleurs notamment la synchronisation de l'unité 6 de moulage et du dispositif de transfert des préformes 3.

La transmission primaire 19 comprend une came 25 primaire, montée sur l'arbre à cames 22, ainsi qu'un suiveur 26 de came primaire coopérant avec la came primaire 25 et couplé à chaque support 10 de demi-moule.

Plus précisément, suivant un premier mode de réalisation (non représenté), la came primaire et le suiveur de came primaire sont communs pour les deux supports de demi-moules, un jeu de leviers assurant alternativement l'écartement et le rapprochement des supports.

Toutefois, suivant un mode de réalisation préféré, correspondant aux dessins, une paire de cames primaires 25, et une paire de suiveurs 26 de cames primaires correspondants, sont prévus pour commander séparément (bien que de manière synchronisée) l'écartement et, réciproquement, le rapprochement des supports 10. En effet, un tel montage est préférable pour vaincre - et ce avec une vitesse de fonctionnement élevée - l'inertie des supports 10 de demi-moules (avec leurs demi-moules 9 correspondants).

Les deux cames primaires 25 sont montées à deux extrémités opposées de l'arbre à cames 22, chaque came 25 se présentant sous la forme d'un disque dans lequel est ménagée une rainure 27 à profil asymétrique formant un chemin de came à contour fermé autour de l'axe de rotation de l'arbre 22, tandis que le suiveur 26 de came primaire correspondant comprend un galet 28 monté librement pivotant à l'extrémité d'un levier 29 rigidement fixé par son extrémité opposée sur un arbre 30 secondaire décalé par rapport à l'arbre à cames 22 d'une distance supérieure au rayon de la came primaire 25. Deux bielles 31, également rigidement fixées à chacune des extrémités de l'arbre secondaire 30, sont reliées au support 10 de demi-moule correspondant pour transformer le mouvement de rotation de l'arbre secondaire 30, dû au mouvement de balancier du levier 29 au cours de la rotation de la came 25, en mouvement linéaire du support 10 de demi-moule.

Comme indiqué ci-dessus, chaque support 10 de demi-moule est entraîné en translation par son propre jeu de came/suiveur de came. De ce point de vue, l'unité 6 de moulage présente une symétrie plane par rapport à un plan vertical transversal, les deux jeux de came primaire 25/ suiveur 26 de came primaire étant montés tête bêche, deux arbres 30 secondaires parallèles étant prévus comme cela est visible sur la figure 2 et sur les figures 4A à 6B.

La transmission secondaire 20 comprend une came 32 secondaire, également montée sur l'arbre à cames 22, ainsi qu'un suiveur 33 de came secondaire coopérant avec la came secondaire 32 et couplé au support 15 de fond de moule.

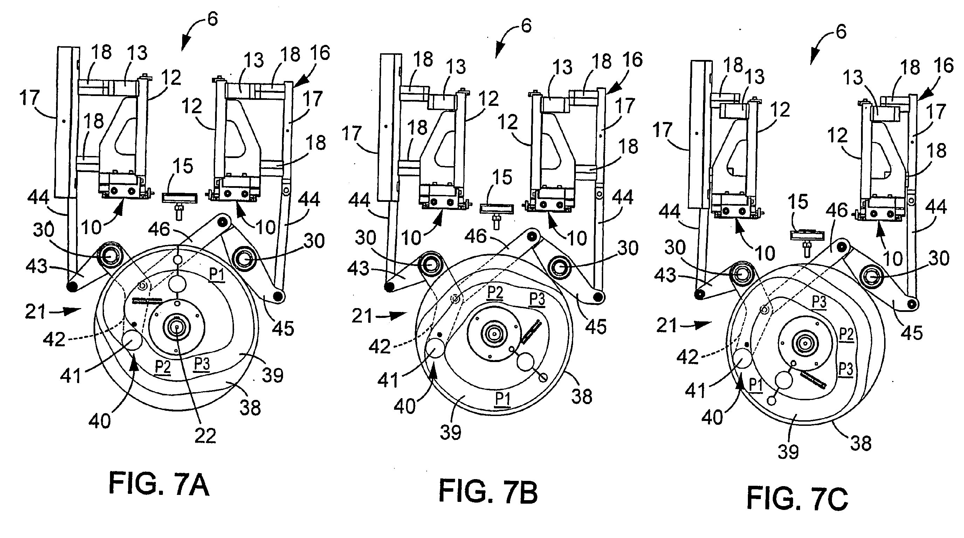

Plus précisément, et comme cela est visible sur les figures 7A à 7C, la came 32 secondaire présente un chemin de came 34 constitué par sa périphérie dont le contour est asymétrique, le suiveur 33 de came secondaire comprenant un galet 35 monté librement pivotant sur un levier 35 monté en libre rotation sur l'un des arbres 30 secondaires (par exemple par l'intermédiaire d'un palier à contact par glissement ou roulement), levier 36 sur lequel est monté articulé le support 15 de fond de moule par l'intermédiaire d'une biellette 37. Le poids du support 15 de fonde de moule et de sa biellette 37 peut suffire à maintenir le contact du galet 35 sur son chemin de came 33, mais un ressort de rappel (non représenté) peut être prévu pour solliciter en permanence le levier 36 en direction de la came 32.

Quant à la transmission tertiaire 21, elle comprend, d'une part, une came 38 tertiaire montée sur l'arbre à cames 22, adossée à l'une des cames primaires 25, et comme celle-ci formée par un disque dans lequel est ménagée une rainure 39 (visible en transparence sur les figures 7A à 7C) à profil asymétrique formant un chemin de came à contour fermé autour de l'axe de rotation de l'arbre à cames 22, et, d'autre part, un suiveur 40 de came tertiaire coopérant avec la came 38 et couplé conjointement aux deux verrous 17.

Le poids des verrous s'avère en pratique suffisamment faible pour que le suiveur de came 40 puisse, seul (par l'intermédiaire d'un jeu de bielles) commander simultanément les deux verrous.

Ainsi, comme cela est représenté sur les figures 7A, 7B et 7C où la transmission tertiaire 21 est visible par transparence, le suiveur 40 de came tertiaire comprend un galet 41, qui coopère avec le chemin de came 39, monté librement pivotant à une extrémité d'un levier 42 coudé lui-même monté en libre rotation sur l'un des arbres secondaires 30. Une manivelle 43, également montée sur cet arbre secondaire 30 et rigidement fixée au levier 42 coudé, est reliée par ailleurs à l'un des verrous 17 par l'intermédiaire d'une bielle 44 pour transformer le mouvement de rotation du levier 42 coudé en un mouvement de translation du verrou 17. Un autre levier 45, sensiblement symétrique, est par ailleurs monté en libre rotation par son centre sur l'autre arbre secondaire 30. Ce levier 45 est, par une première extrémité, relié au coude du levier 42 par l'intermédiaire d'une biellette 46 et, par une extrémité opposée, à l'autre verrou 17 par l'intermédiaire d'une bielle 44, pour transformer le mouvement de rotation du levier 42 coudé en un mouvement de translation verticale du verrou 17.

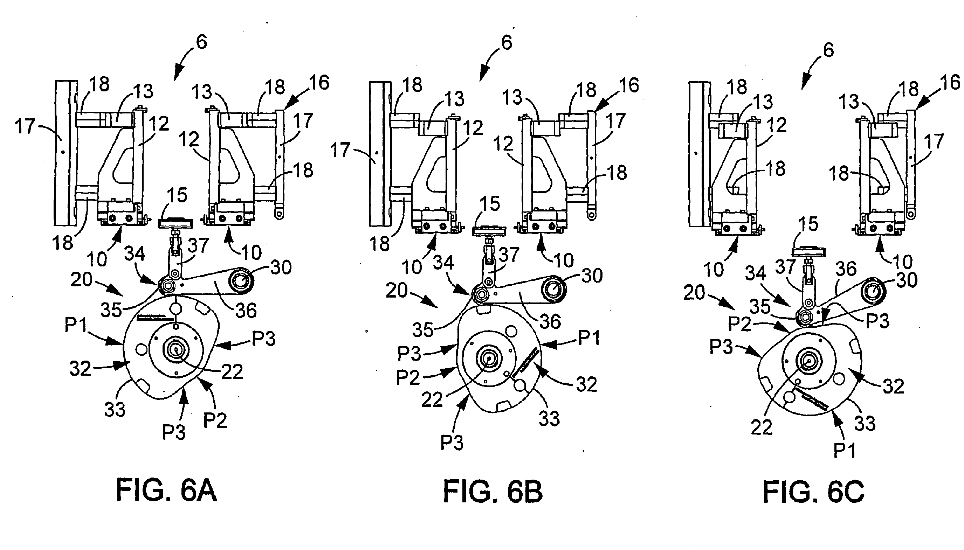

S'agissant des profils des cames 25, 32, 38, l'homme du métier est à même de les réaliser en fonction des dimensions de l'unité 6 de moulage et du cycle retenu pour les opérations de moulage. Précisons qu'en l'occurrence, chaque chemin de came 27, 33, 39 présente :
- une première portion P1 à grand rayon constant, qui s'étend sensiblement sur 180°, et qui correspond :
   - pour la came primaire 25, à la position fermée du support 10 de demi-moule correspondant (figures 5A, 5B),
   - pour la came secondaire 32, à la position haute du support 15 de fond de moule,
   - pour la came tertiaire 38, à la position déverrouillée des verrous 17 (figures 6A, 6B),
- une deuxième portion P2 à rayon petit rayon constant, qui s'étend sensiblement sur 90°, et qui correspond :
   - pour la came primaire 25, à la position ouverte du support 10 de demi-moule correspondant (figures 5A, 5B),
   - pour la came secondaire 32, à la position basse du support 15 de fond de moule,
   - pour la came tertiaire 38, à la position verrouillée des verrous 17 (figures 6A, 6B),
- et deux portions de liaison P3 qui effectuent un raccord continu entre la première portion P1 et la deuxième P2.

Il résulte de la conception de l'unité 6 de moulage qui vient d'être décrite un certain nombre d'avantages.

Premièrement, la transmission du mouvement de type « tout mécanique » permet de s'affranchir des problèmes de maintenance et de sécurité rencontrés dans les systèmes hydrauliques à vérins (citons notamment les défauts d'étanchéité, difficilement réparables et ayant des conséquences en termes de sécurité compte tenu de des importantes pressions d'huile). La maintenance de l'unité 6 de moulage se trouve facilitée par l'accessibilité des transmissions 19, 20, 21, regroupées autour d'un même arbre 22 disposé sous le moule 7. Les cames 25, 32, 38, de même que les leviers et bielles 29, 31, 36 37, 42, 43, 44, 45, 46, peuvent être facilement démontés et remplacés (voire réparés) *in situ.*

S'agissant de l'entraînement, un seul moteur 23 électrique suffit pour le fonctionnement de l'unité 6 de moulage, ce moteur 23 entraînant l'arbre à cames 22 avec distribution sur les supports 10 de demi-moules, support 15 de fond de moule et verrous 17 sans qu'il soit nécessaire de recourir à des moteurs auxiliaires, au bénéfice de la simplicité de fonctionnement (aucune synchronisation de moteurs ou vérins n'étant nécessaire) et de maintenance. Ce moteur 23 unique, dimensionné pour les pièces à déplacer les plus lourdes (en l'occurrence les supports 10 de demi-moules et leurs demi-moules 9 respectifs), convient nécessairement pour les pièces les moins lourdes (le support 15 de fond de moule et les verrous 17), de sorte qu'un seul dimensionnement est nécessaire, au bénéfice de la simplicité de conception.

En outre, le regroupement des transmissions 19, 20, 21 autour d'un même arbre de transmission 22, et le montage des cames 25, 32, 38 sur cet arbre 22, permettent d'éviter l'accumulation de tolérances de montage nécessaires dans les machines complexes où les pièces mobiles sont montées en cascade, de telles tolérances étant génératrices de jeux de fonctionnement. De tels jeux de fonctionnement sont ici minimisés.

## Revendications

1. Unité (6) de moulage pour une installation (1) de soufflage ou d'étirage soufflage de récipients (2) à partir d'ébauches (3) en matière thermoplastique, qui comprend :
- une paire de demi-moules (9), munis chacun d'au moins une demi-cavité de moulage, montés respectivement sur deux supports (10) mobiles en translation horizontale suivant une direction transversale perpendiculaire à une direction longitudinale d'amenée des ébauches (3), entre une position fermée dans laquelle les supports (10) sont rapprochés et où les demi-cavités forment conjointement une paroi latérale d'une cavité (8) de moulage, et une position ouverte dans laquelle les supports (10) sont écartés l'un de l'autre ;
- une transmission (19) primaire commandant le déplacement des supports (10) de demi-moules ;
- un fond (14) de moule monté sur un support (15) mobile en translation verticale suivant une direction perpendiculaire aux directions longitudinale et transversale, entre une position haute dans laquelle une surface supérieure du fond de moule (14) complète la cavité de moulage (8) en position fermée des supports (10), et une position basse écartée de la position haute, sous celle-ci ;
- une transmission (20) secondaire commandant le déplacement du support (15) de fond de moule ;
- un dispositif (16) de verrouillage, qui comprend deux verrous (17) coopérant chacun avec un support (10) de demi-moule, mobiles en translation entre une position de verrouillage dans laquelle les verrous (17) bloquent les supports (10) de demi-moules en position fermée, et une position de libération dans laquelle les verrous (17) permettent le passage des supports (10) de demi-moules en position ouverte ;
- une transmission (21) tertiaire commandant le déplacement des verrous (17) ;
**caractérisé en ce que**
- la transmission primaire (19) comprend une came (25) primaire montée sur un arbre (22) tournant entraîné par un moteur (23), ainsi qu'un suiveur (26) de came primaire coopérant avec la came (25) primaire et couplé à chaque support (10) de demi-moule,
- la transmission secondaire (20) comprend une came (32) secondaire montée sur le même arbre (22) tournant, ainsi qu'un suiveur (34) de came secondaire coopérant avec la came secondaire (32) et couplé au support (15) du fond de moule ;
- la transmission tertiaire (21) comprend une came (38) tertiaire montée sur le même arbre (22) tournant, ainsi qu'un suiveur (40) de came tertiaire coopérant avec la came tertiaire (38) et couplé à chaque verrou (17).

2. Unité (6) de moulage selon la revendication 1,
**caractérisée**
**en ce que** la came primaire (25) se présente sous la forme d'un disque monté sur l'arbre (22) tournant et dans lequel est ménagé un chemin de came (27),
**en ce que** le suiveur (26) de came primaire comprend un galet (28) qui coopère avec le chemin (27) de came correspondant,
et **en ce que** le galet (28) est monté sur un levier (29) monté en rotation sur un arbre (30) secondaire parallèle à l'arbre (22) tournant, ce levier (29) étant couplé à au moins un support (10) de demi-moule par l'intermédiaire d'au moins une bielle (31) rigidement montée sur ledit arbre secondaire (30).

3. Unité (6) de moulage selon la revendication 1 ou 2, **caractérisée en ce que** le suiveur (26) de came primaire est commun pour les deux supports (10) de demi-moules.

4. Unité (6) de moulage selon la revendication 1 ou 2, **caractérisée en ce que** la transmission primaire (19) comprend deux cames primaires (25) montées sur l'arbre tournant (22), ainsi que deux suiveurs (26) de cames primaires coopérant respectivement avec les cames primaires (25) et couplés respectivement aux deux supports (10) de demi-moules.

5. Unité (6) de moulage selon l'une des revendications 1 à 4, **caractérisée en ce que** la came secondaire (32) présente un chemin de came (33) constitué par sa périphérie à contour asymétrique, **en ce que** le suiveur (34) de came secondaire comprend un galet (35) monté sur un levier (36), monté en libre rotation sur un arbre secondaire (30) et relié au support (15) de fond de moule par l'intermédiaire d'une biellette (37).

6. Unité (6) de moulage selon l'une des revendications 1 à 5, **caractérisée en ce que**
la came tertiaire (38) comprend un disque monté sur l'arbre de transmission et dans lequel est ménagé un chemin de came (39),
**en ce que** le suiveur (40) de came tertiaire comprend un galet (41) qui coopère avec le chemin de came (39) correspondant,
et **en ce que** le galet (41) est monté sur un levier (42) monté en rotation sur un arbre secondaire (30) parallèle à l'arbre tournant, ce levier (42) étant couplé aux verrous (17) par l'intermédiaire d'un jeu de bielles et levier (43, 44, 45, 46).

7. Unité (6) de moulage selon l'une des revendications 1 à 6, **caractérisée en ce que** les verrous (17) sont munis de guides (18) cannelés, **en ce que** les supports (10) de demi-moules sont munis de patins (13) cannelés de forme complémentaire des guides (18) et qui, en position de verrouillage, sont en butée contre les guides (18), et en position de libération coopèrent à glissement avec ceux-ci.

8. Installation (1) de fabrication de récipients (2) par soufflage ou étirage soufflage, qui comprend une unité (6) de moulage selon l'une des revendications 1 à 7.

## Claims

1. A molding unit (6) for an installation (1) for blow-molding or stretch-blow-molding containers (2) from blanks (3) made of thermoplastic material, which comprises:
- a pair of half-molds (9), each provided with at least one mold half-cavity, respectively mounted on two supports (10) which are mobile in horizontal translation in a transverse direction perpendicular to a longitudinal direction for supplying the blanks (3), between a closed position in which the supports (10) are brought together and where the half-cavities jointly form a lateral wall of a mold cavity (8) and an open position in which the supports (10) are separated from one another;
- a primary transmission (19) controlling the displacement of the half-mold supports (10);
- a mold base (14) mounted on a support (15) which is mobile in vertical translation in a direction perpendicular to the longitudinal and transverse directions, between an upper position in which an upper surface of the mold base (14) completes the mold cavity (8) in the closed position of the supports (10) and a lower position spaced apart from the upper position, below said upper position;
- a secondary transmission (20) controlling the displacement of the mold base support (15);
- a locking device (16) which comprises two locks (17), each cooperating with a half-mold support (10), mobile in translation between a locked position in which the locks (17) lock the half-mold supports (10) in the closed position, and a released position in which the locks (17) permit the passage of the half-mold supports (10) into the open position; and
- a tertiary transmission (21) controlling the displacement of the locks (17),
**characterized in that**
- the primary transmission (19) comprises a primary cam (25) mounted on a rotating shaft (22) driven by a motor (23), in addition to a primary cam follower (26) cooperating with the primary cam (25) and coupled to each half-mold support (10);
- the secondary transmission (20) comprises a secondary cam (32) mounted on the same rotating shaft (22), in addition to a secondary cam follower (34) cooperating with the secondary cam (32) and coupled to the mold base support (15); and
- the tertiary transmission (21) comprises a tertiary cam (38) mounted on the same rotating shaft (22), in addition to a tertiary cam follower (40) cooperating with the tertiary cam (38) and coupled to each lock (17).

2. The molding unit (6) as claimed in claim 1, **characterized in that** the primary cam (25) is in the form of a disk mounted on the rotating shaft (22) and in which a cam path (27) is formed, **in that** the primary cam follower (26) comprises a roller (28) which cooperates with the corresponding cam path (27) and **in that** the roller (28) is mounted on a lever (29) mounted in rotation on a secondary shaft (30) parallel to the rotating shaft (22), said lever (29) being coupled to at least one half-mold support (10) by means of at least one connecting rod (31) rigidly mounted on said secondary shaft (30).

3. The molding unit (6) as claimed in claim 1 or 2, **characterized in that** the primary cam follower (26) is common to the two half-mold supports (10).

4. The molding unit (6) as claimed in claim 1 or 2, **characterized in that** the primary transmission (19) comprises two primary cams (25) mounted on the rotating shaft (22) in addition to two primary cam followers (26) respectively cooperating with the primary cams (25) and coupled respectively to the two half-mold supports (10).

5. The molding unit (6) as claimed in one of claims 1 to 4, **characterized in that** the secondary cam (32) has a cam path (33) formed by its periphery of asymmetrical contour, **in that** the secondary cam follower (34) comprises a roller (35) mounted on a lever (36), mounted freely in rotation on a secondary shaft (30) and connected to the mold base support (15) by means of a connecting rod (37).

6. The molding unit (6) as claimed in one of claims 1 to 5, **characterized in that** the tertiary cam (38) comprises a disk mounted on the transmission shaft and in which a cam path (39) is formed, **in that** the tertiary cam follower (40) comprises a roller (41) which cooperates with the corresponding cam path (39) and **in that** the roller (41) is mounted on a lever (42) mounted in rotation on a secondary shaft (30) parallel to the rotating shaft, said lever (42) being coupled to the locks (17) by means of a connecting rod and lever set (43, 44, 45, 46).

7. The molding unit (6) as claimed in one of claims 1 to 6, **characterized in that** the locks (17) are provided with grooved guides (18), **in that** the half-mold supports (10) are provided with grooved runners (13) of complementary shape to the guides (18) and which, in the locked position, are in abutment against the guides (18) and in the release position cooperate slidably therewith.

8. An installation (1) for manufacturing containers (2) by blow-molding or stretch-blow-molding which comprises a molding unit (6) as claimed in one of claims 1 to 7.

## Patentansprüche

1. Schließeinheit (6) für eine Anlage (1) zum Blasformen oder Streckblasen von Behältern (2) aus Vorformlingen (3) aus einem thermoplastischen Werkstoff, die Folgendes umfasst:
- ein Paar Formhälften (9), die jeweils mit mindestens einer Formhohlraumhälfte ausgestattet sind, die jeweils an zwei Halterungen (10) montiert sind, die sich in einer Querrichtung senkrecht zur Längsrichtung der Zuführung der Vorformlinge (3) waagerecht geradlinig bewegen zwischen einer geschlossenen Stellung, in der die Halterungen (10) aneinander liegen und in der die Hohlraumhälften gemeinsam eine Seitenwand eines Formhohlraums (8) bilden, und einer geöffneten Stellung, in der die Halterungen (10) voneinander entfernt sind;
- ein erstes Getriebe (19), mit dem die Bewegung der Formhälftenhalterungen (10) gesteuert wird;
- einen Formboden (14), der auf einer Halterung (15) montiert ist, der sich in einer Richtung senkrecht zur Längs- und Querrichtung senkrecht geradlinig bewegt zwischen einer hohen Stellung, in der eine obere Fläche des Formbodens (14) den Formhohlraum (8) in der geschlossenen Stellung der Halterungen (10) abschließt, und einer niedrigen Stellung, die von der hohen Stellung beabstandet ist, unter dieser Stellung;
- ein zweites Getriebe (20), mit dem die Bewegung der Formbodenhalterung (15) gesteuert wird;
- eine Arretiervorrichtung (16), die zwei Arretierelemente (17) umfasst, die jeweils mit einer Formhälftenhalterung (10) zusammenwirken und sich geradlinig bewegen zwischen einer Arretierstellung, in der die Arretierelemente (17) die Formhälftenhalterungen (10) in der geschlossenen Stellung sichern, und einer Freigabestellung, in der die Arretierelemente (17) die Formhälftenhalterungen (10) in die geöffnete Stellung gelangen lassen;
- ein drittes Getriebe (21), mit dem die Bewegung der Arretierelemente (17) gesteuert wird;
**dadurch gekennzeichnet, dass**
- das erste Getriebe (19) einen ersten Nocken (25) umfasst, der auf einer sich drehenden Welle (22), die von einem Motor (23) angetrieben wird, montiert ist, sowie einen ersten Abtaster (26), der mit dem ersten Nocken (25) zusammenwirkt und mit jeder Formhälftenhalterung (10) gekoppelt ist,
- das zweite Getriebe (20) einen zweiten Nocken (32) umfasst, der auf derselben sich drehenden Welle (22) montiert ist, sowie einen zweiten Abtaster (34), der mit dem zweiten Nocken (32) zusammenwirkt und mit der Formbodenhalterung (15) gekoppelt ist;
- das dritte Getriebe (21) einen dritten Nocken (38) umfasst, der auf derselben sich drehenden Welle (22) montiert ist, sowie einen dritten Abtaster (40), der mit dem dritten Nocken (38) zusammenwirkt und mit jedem Verschluss (17) gekoppelt ist.

2. Schließeinheit (6) nach Anspruch 1,
**dadurch gekennzeichnet, dass**
der erste Nocken (25) als Scheibe geformt ist, die auf einer sich drehenden Welle (22) montiert ist und mit einer Nockenbahn (27) versehen ist,
dadurch, dass der erste Abtaster (26) eine Rolle (28) umfasst, die mit der entsprechenden Nockenbahn (27) zusammenwirkt,
und dadurch, dass die Rolle (28) an einem Hebel (29) montiert ist, der drehbar an einer zweiten Welle (30), die parallel zur sich drehenden Welle (22) verläuft, montiert ist, wobei dieser Hebel (29) über mindestens eine Pleuelstange (31), die starr an der zweiten Welle (30) montiert ist, mit mindestens einer Formhälftenhalterung (10) gekoppelt ist.

3. Schließeinheit (6) nach Anspruch 1 oder 2, **dadurch gekennzeichnet, dass** der erste Abtaster (26) für die beiden Formhälftenhalterungen (10) gemeinsam verwendet wird.

4. Schließeinheit (6) nach Anspruch 1 oder 2, **dadurch gekennzeichnet, dass** das erste Getriebe (19) zwei erste Nocken (25) umfasst, die auf der sich drehenden Welle (22) montiert sind, sowie zwei erste Abtaster (26), die jeweils mit den ersten Nocken (25) zusammenwirken und jeweils mit den beiden Formhälftenhalterungen (10) gekoppelt sind.

5. Schließeinheit (6) nach einem der Ansprüche 1 bis 4, **dadurch gekennzeichnet, dass** der zweite Nocken (32) eine Nockenbahn (33) aufweist, die von seinem Umfang mit asymmetrischem Umriss gebildet wird, dadurch, dass der zweite Abtaster (34) eine Rolle (35) umfasst, die an einem Hebel (36) montiert ist, der frei drehbar an einer zweiten Welle (30) montiert und über eine Stange (37) mit der Formbodenhalterung (15) verbunden ist.

6. Schließeinheit (6) nach einem der Ansprüche 1 bis 5, **dadurch gekennzeichnet, dass**
der dritte Nocken (38) eine Scheibe umfasst, die auf der Antriebswelle montiert ist und mit einer Nockenbahn (39) versehen ist,
**dadurch**, dass der dritte Abtaster (40) eine Rolle (41) umfasst, die mit der entsprechenden Nockenbahn (39) zusammenwirkt,
und **dadurch**, dass die Rolle (41) an einem Hebel (42) montiert ist, der drehbar an einer zweiten Welle (30), die parallel zur sich drehenden Welle verläuft, montiert ist, wobei dieser Hebel (42) über einen Satz aus Stangen und Hebeln (43, 44, 45, 46) mit den Arretierelementen (17) gekoppelt ist.

7. Schließeinheit (6) nach einem der Ansprüche 1 bis 6, **dadurch gekennzeichnet, dass** die Arretierelemente (17) mit geriffelten Führungen (18) versehen sind, dadurch, dass die Formhälftenhalterungen (10) mit geriffelten Führungsgliedern (13) versehen sind, deren Form komplementär zu der der Führungen (18) ist und die in der Arretierstellung an den Führungen (18) anstoßen und in der Freigabestellung verschiebbar mit ihnen zusammenwirken.

8. Anlage (1) zur Herstellung von Behältern (2) durch Blasformen oder Streckblasen, die eine Schließeinheit (6) nach einem der Ansprüche 1 bis 7 umfasst.
